# EUROPÄISCHE PATENTSCHRIFT

(11) **EP 1 379 952 B1**
(45) Veröffentlichungstag und Bekanntmachung des Hinweises auf die Patenterteilung: **04.08.2004**
(21) Anmeldenummer: 02727292.1
(22) Anmeldetag: 09.04.2002
(51) Int. Cl.: G06F 11/36

(54) **PROGRAMMGESTEUERTE EINHEIT**
PROGRAM-CONTROLLED UNIT
UNITE A COMMANDE PROGRAMMEE

(30) Priorität: 20.04.2001 DE 10119266
(43) Veröffentlichungstag der Anmeldung: 14.01.2004
(73) Patentinhaber: Infineon Technologies AG, 81669 München (DE)
(72) Erfinder: MAIER, Klaus, D., 88400 Biberach (DE); KÖNIG, Dietmar, 81543 München (DE); KOLOF, Andreas, 82194 Gröbenzell (DE); MAYER, Albrecht, 82041 Deisenhofen (DE)
(74) Vertreter: Repkow, Ines, Dr. Dipl.-Ing.
(86) Internationale Anmeldenummer: PCT/DE2002/001295
(87) Internationale Veröffentlichungsnummer: WO 2002/086727

(56) Entgegenhaltungen:
- EP-A- 0 455 946
- EP-A- 0 982 595
- US-A- 6 065 078

## Beschreibung

Die vorliegende Erfindung betrifft eine Vorrichtung gemäß dem Oberbegriff des Patentanspruchs 1, d.h. eine programmgesteuerte Einheit mit einem oder mehreren Cores, und mit Debug-Ressourcen, durch welche ausgewählte Adressen, Daten, und/oder Steuersignale enthaltende Trace-Informationen aus der programmgesteuerten Einheit ausgegeben oder in dieser gespeichert werden.

Programmgesteuerte Einheiten wie Mikroprozessoren, Mikrocontroller, Signalprozessoren etc. sind seit vielen Jahren in unzähligen Ausführungsformen bekannt.

Ein bekanntes Problem von programmgesteuerten Einheiten besteht darin, daß darin auftretende Fehler häufig nicht ohne weiteres lokalisierbar und/oder behebbar sind.

Die Lokalisierung und Behebung von in programmgesteuerten Einheiten auftretenden Fehlern erfolgte früher und teilweise auch jetzt noch unter Verwendung spezieller Bond-Out-Versionen der zu untersuchenden programmgesteuerten Einheiten. Bond-Out-Versionen von programmgesteuerten Einheiten unterscheiden sich von den in Massenprodukten eingesetzten Standard-Versionen der betreffenden programmgesteuerten Einheiten dadurch, daß sie mehr Ein- und/oder Ausgabeanschlüsse aufweisen, wobei die zusätzlichen Ein- und/oder Ausgabeanschlüsse mit in der Standard-Version der programmgesteuerten Einheit nicht frei zugänglichen Stellen der programmgesteuerten Einheit verbunden sind. Dadurch können Informationen über interne Zustände oder Vorgänge, genauer gesagt normalerweise nicht ausgegebene Adressen, Daten und/oder Steuersignale wie beispielsweise, aber bei weitem nicht ausschließlich der jeweils aktuelle Stand des Program Counter, aus der programmgesteuerten Einheit ausgegeben und außerhalb der programmgesteuerten Einheit ausgewertet werden. Durch die Auswertung der Informationen läßt sich der Verlauf der innerhalb der programmgesteuerten Einheit ablaufenden Vorgänge verfolgen, wodurch in der programmgesteuerten Einheit auftretende Fehler lokalisiert und behoben werden können.

Die Verwendung von Bond-Out-Versionen ist jedoch mit einer Reihe von Nachteilen verbunden. Insbesondere sind die Bond-Out-Versionen von programmgesteuerten Einheiten größer und teurer als die Standard-Versionen, und, was noch wichtiger ist, verhalten sich die Bond-Out-Versionen in der Regel nicht exakt so wie die Standard-Versionen.

Man ist daher teilweise dazu übergegangen, programmgesteuerte Einheiten mit Debug-Ressourcen auszustatten, welche aus der programmgesteuerten Einheit zur Fehlerlokalisierung und Fehlerbehebung benötigte Informationen extrahieren und über eine nur wenige Pins umfassende und teilweise auch für andere Zwecke benutzbare Schnittstelle aus der programmgesteuerten Einheit ausgeben oder in dieser speichern.

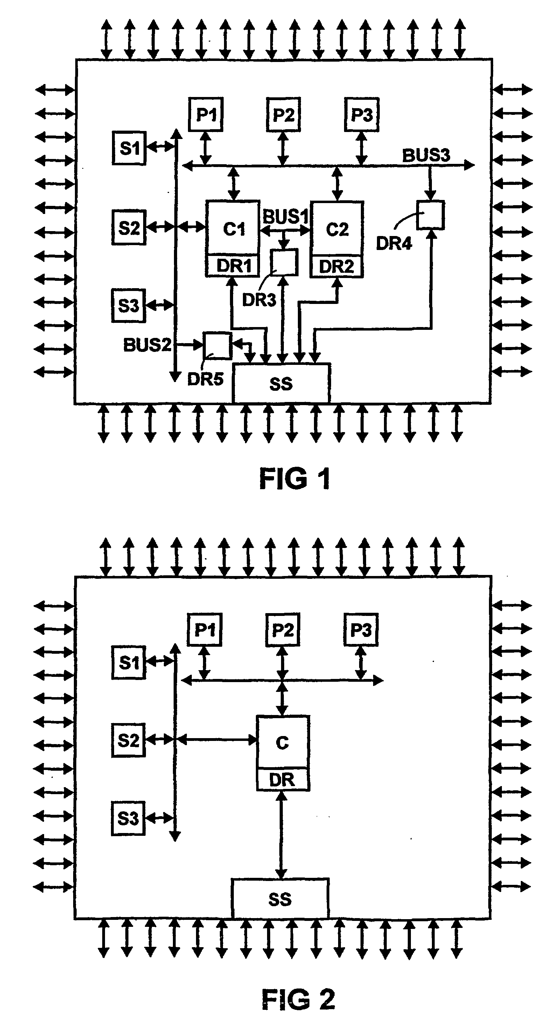

Eine solche programmgesteuerte Einheit ist in Figur 2 dargestellt.

Die in der Figur 2 gezeigte programmgesteuerte Einheit ist ein Mikrocontroller und enthält einen Core C, über einen ersten Bus BUS1 mit dem Core C verbundene Peripherieeinheiten P1, P2, P3, über einen zweiten Bus BUS2 mit dem Core C verbundene Speichereinrichtungen S1, S2, S3, mit dem Core C in Verbindung stehende Debug-Ressourcen DR, und eine den Debug-Ressourcen DR zugeordnete Schnittstelle SS, über welche die Debug-Ressourcen DR an eine externe Einrichtung auszugebende Daten ausgeben, und über welche die Debug-Ressourcen DR von der externen Einrichtung gesteuert werden.

Die Peripherieeinheiten P1 bis P3 sind beispielsweise ein A/D-Wandler, ein Timer, ein Codierer, eine Komprimierungseinrichtung, eine CAN-Schnittstelle, oder sonstige in Mikrocontroller integrierbare Einheiten; die Speichereinrichtungen sind beispielsweise ein RAM, ein ROM, und ein Flash-Speicher.

Die Debug-Ressourcen DR sind vorzugsweise in der Lage, sogenannte Trace-Informationen auszugeben. Hierzu wird durch die Debug-Ressourcen DR das Auftreten von von außerhalb der programmgesteuerten Einheit vorgebbaren Bedingungen innerhalb des Core der programmgesteuerten Einheit überwacht, und jedesmal, wenn die Bedingung oder eine der Bedingungen erfüllt ist, ohne eine Unterbrechung des Betriebes der programmgesteuerten Einheit von außerhalb der programmgesteuerten Einheit vorgebbare Adressen, Daten und/oder Steuersignale aus der programmgesteuerten Einheit ausgegeben. Dadurch ist es beispielsweise, aber bei weitem nicht ausschließlich möglich, daß die Debug-Ressourcen DR jedesmal, wenn der Core Daten von einer bestimmten Adresse oder einem bestimmten Adreßbereich lesen möchte, die dem Core daraufhin zugeführten Daten aus der programmgesteuerten Einheit ausgeben.

Im allgemeinen führen die Debug-Ressourcen DR darüber hinaus auch noch weitere Aktionen aus, die für die Lokalisierung und Behebung von in der programmgesteuerten Einheit auftretenden Fehlern notwendig oder hilfreich sind. So sind die Debug-Ressourcen DR beispielsweise in der Lage, die programmgesteuerte Einheit beim Auftreten bestimmter Bedingungen, beispielsweise bei Erreichen eines bestimmten Program-Counter-Standes anzuhalten und die Inhalte von interessierenden Registern auszulesen oder zu verändern.

Solche, auch als OCDS-Module bezeichneten Debug-Ressourcen sind bekannt, so daß auf die Beschreibung weiterer Einzelheiten verzichtet wird.

Aufgrund der zunehmenden Bedeutung des Vorsehens von Debug Ressourcen in programmgesteuerten Einheiten wurde von der IEEE Industry Standards and Technology Organization (IEEE-ISTO) in 1999 ein als "The Nexus 5001 Forum Standard for a Global Embedded Processor Debug Interface" bezeichneter Standard für das Interface (die Schnittstelle SS) definiert, über welches die Debug-Ressourcen mit einer außerhalb der programmgesteuerten Einheit vorgesehenen Einrichtung, beispielsweise mit einer Debug- oder Emulations-Steuereinheit, oder mit einem Meßgerät wie etwa einem Logikanalysator auf besonders effiziente Art und Weise Daten austauschen können.

Die Debug-Ressourcen und das NEXUS-Interface ermöglichen es mit einem verhältnismäßig geringen Aufwand, in programmgesteuerten Einheiten auftretende Fehler zu erkennen und zu beheben.

Dies gilt allerdings nur für einfach aufgebaute programmgesteuerte Einheiten. Bei komplexeren programmgesteuerten Einheiten, insbesondere bei programmgesteuerten Einheiten mit mehreren Cores steigt der für das Vorsehen von Debug-Ressourcen zu treibende Aufwand stark an. Dies liegt unter anderem daran, daß für jeden Core eigene Debug-Ressourcen vorgesehen werden müssen.

Der vorliegenden Erfindung liegt daher die Aufgabe zugrunde, eine Möglichkeit zu finden, durch welche in programmgesteuerten Einheit auftretende Fehler unter Verwendung von klein und einfach aufgebauten und bedienbaren Debug-Ressourcen lokalisierbar und behebbar sind.

Diese Aufgabe wird erfindungsgemäß durch die in Patentanspruch 1 beanspruchte programmgesteuerte Einheit gelöst.

Die erfindungsgemäße programmgesteuerte Einheit zeichnet sich dadurch aus, daß die Debug-Ressourcen eine oder mehrere Komponenten enthalten, welche mit zwischen den Cores und/oder einzelnen, mehreren oder allen sonstigen Komponenten der programmgesteuerten Einheit verlaufenden Leitungen verbunden sind, und welche von den über diese Leitungen transferierten Adressen, Daten, und/oder Steuersignale ausgewählte Adressen, Daten, und/oder Steuersignale aus der programmgesteuerten Einheit ausgeben oder in dieser speichern können.

Dadurch wird es erheblich einfacher, die Adressen, Daten und/oder Steuersignale zu untersuchen, die zwischen den Cores und/oder einzelnen, mehreren oder allen sonstigen Komponenten der programmgesteuerten Einheit transferiert werden.

Bei herkömmlichen Debug-Ressourcen, d.h. bei Debug-Ressourcen, die ausschließlich mit dem mindestens einen Core der programmgesteuerten Einheit verbunden sind, erfordert dies einen deutlich höheren Aufwand: es muß aus den innerhalb der Cores herrschenden Zuständen und ablaufenden Vorgängen ermittelt werden, ob und gegebenenfalls welche Adressen, Daten und/oder Steuersignale zwischen den Komponenten der programmgesteuerten Einheit transferiert werden. Dies ist komplizierter, weil innerhalb des Cores pro Zeiteinheit erheblich größere Datenmengen übertragen werden als über die die Komponenten der programmgesteuerten Einheit verbindenden Leitungen (Busse), und weil durch die Auswertung einer Vielzahl von Signalen ermittelt werden muß, ob und gegebenenfalls welche Daten vom Core ausgegeben und empfangen werden.

Die Debug-Ressourcen der erfindungsgemäßen programmgesteuerten Einheit können dadurch einfacher aufgebaut und bedient werden als es bei herkömmlichen Debug-Ressourcen der Fall ist.

Darüber hinaus lassen sich durch die erfindungsgemäßen Debug-Ressourcen nicht nur Datentransfers von und zu den Cores überwachen, sondern auch Datentransfers zwischen sonstigen Komponenten der programmgesteuerten Einheit. Dies ist mit herkömmlichen Debug-Ressourcen nicht möglich.

Die Debug-Ressourcen der erfindungsgemäßen programmgesteuerten Einheit sind damit trotz des einfacheren Aufbaus und der einfacheren Bedienbarkeit der programmgesteuerten Einheit sogar leistungsfähiger als herkömmliche Debug-Ressourcen.

Vorteilhafte Weiterbildungen der Erfindung sind den Unteransprüchen, der folgenden Beschreibung und den Figuren entnehmbar.

Die Erfindung wird nachfolgend anhand von Ausführungsbeispielen unter Bezugnahme auf die Figuren näher erläutert. Es zeigen
- Figur 1: den Aufbau der im folgenden näher beschriebenen programmgesteuerten Einheit, und
- Figur 2: den Aufbau der eingangs beschriebenen herkömmlichen programmgesteuerten Einheit.

Bei der im folgenden beschriebenen programmgesteuerten Einheit handelt es sich um einen Mikrocontroller. Die nachfolgend beschriebenen Besonderheiten des Mikrocontrollers, genauer gesagt die nachfolgend beschriebenen Besonderheiten der darin vorgesehenen Debug-Ressourcen lassen sich jedoch auch bei beliebigen anderen programmgesteuerten Einheiten einsetzen.

Die im folgenden beschriebene programmgesteuerte Einheit ist schematisch in Figur 1 dargestellt. Der Vollständigkeit halber sei darauf hingewiesen, daß nur die vorliegend besonders interessierenden Komponenten der programmgesteuerten Einheit gezeigt sind und beschrieben werden.

Die in der Figur 1 gezeigte programmgesteuerte Einheit enthält einen ersten Core C1, einen zweiten Core C2, über einen ersten Bus BUS1 mit den Cores C1 und C2 verbundene Peripherieeinheiten P1, P2, und P3, über einen zweiten Bus BUS2 mit den Cores C1 und C2 verbundene Speichereinrichtungen S1, S2, und S3, einen die Cores C1 und C2 miteinander verbindenden dritten Bus BUS3, Debug Ressourcen DR1 bis DR5, sowie einen Schnittstelle SS, über welche die Debug-Ressourcen-Komponenten DR1 bis DR5 an eine externe Einrichtung auszugebende Daten ausgeben, und über welche die Debug-Ressourcen-Komponenten DR1 bis DR5 von der externen Einrichtung gesteuert werden.

Die Komponenten der programmgesteuerten Einheit, die mit den selben Bezugszeichen bezeichnet sind, wie die in der programmgesteuerten Einheit gemäß Figur 2 enthaltenen Komponenten, sind identische oder einander entsprechende Komponenten.

Die Schnittstelle SS ist eine nach dem eingangs erwähnten NEXUS-Standard aufgebaute Schnittstelle, könnte aber auch eine andere Schnittstelle sein, beispielsweise eine JTAG-Schnittstelle.

Die eigentliche Besonderheit der betrachteten programmgesteuerten Einheit sind die durch die Komponenten DR1 bis DR5 gebildeten Debug-Ressourcen.

Von diesen Debug-Ressourcen-Kömponenten
- ist die Debug-Ressourcen-Komponente DR1 mit dem ersten Core C1 verbunden,
- ist die Debug-Ressourcen-Komponente DR2 mit dem zweiten Core C2 verbunden,
- ist die Debug-Ressourcen-Komponente DR3 mit dem ersten Bus BUS1 verbunden,
- ist die Debug-Ressourcen-Komponente DR4 mit dem zweiten Bus BUS2 verbunden, und
- ist die Debug-Ressourcen-Komponente DR5 mit dem dritten Bus BUS3 verbunden.

Die mit den Bussen BUS1 bis BUS3 verbundenen Debug-Ressourcen-Komponenten DR3 bis DR5 überwachen die über die jeweiligen Busse transferierten Adressen, Daten und/oder Steuersignale. Genauer gesagt überprüfen sie, ob die transferierten Daten bestimmte Bedingungen erfüllen, beispielsweise ob eine über den Bus übertragene Adresse mit einer vorgegebenen Adresse übereinstimmt oder innerhalb eines vorgegebenen Adreßbereiches liegt. Die Vorgabe der Bedingungen erfolgt durch eine außerhalb der programmgesteuerten Einheit vorgesehene Steuereinrichtung über die Schnittstelle SS. Wenn eine der Debug-Ressourcen-Komponenten DR3 bis DR5 feststellt, daß eine Bedingung, deren Eintreten sie zu überwachen hat, eingetreten ist, reagiert sie in einer von außerhalb der programmgesteuerten Einheit über die Schnittstelle SS vorgebbaren Art und Weise darauf. Die Reaktion kann die Ausgabe bestimmter Daten, die gleichzeitig oder zu einem bestimmten früheren oder zu einem bestimmten späteren Zeitpunkt über den zugeordneten Bus übertragen werden, an die Schnittstelle SS umfassen. Die Reaktion kann zusätzlich oder statt dessen eine Mitteilung an eine, mehrere oder alle anderen Debug-Ressourcen-Komponenten umfassen, durch welche den betreffenden Debug-Ressourcen-Komponenten signalisiert wird, daß eine Bedingung, die es zu überwachen gilt, eingetreten ist. Die anderen Debug-Ressourcen-Komponenten reagieren auf eine solche Mitteilung in einer von außerhalb der programmgesteuerten Einheit über die Schnittstelle SS vorgebbaren Art und Weise. Diese Reaktion kann umfassen, daß die jeweilige Debug-Ressourcen-Komponente bestimmte Daten, auf welche sie Zugriff hat, an die Schnittstelle SS ausgibt, oder bestimmte andere Aktionen ausführt, beispielsweise den Core, dem sie zugeordnet ist, anhält. Die Reaktion kann dabei auch von der Erfüllung einer oder mehrerer weiterer Bedingungen abhängig gemacht werden, wobei das Eintreten dieser Bedingungen, durch die jeweilige Debug-Ressourcen-Komponente selbst oder durch eine andere Debug-Ressourcen-Komponente überwacht werden kann.

Bedingt durch den Umstand, daß die Debug-Ressourcen-Komponenten DR3 bis DR5 die über die Busse transferierten Adressen, Daten und/oder Steuersignale verfolgen und bei Bedarf an die Schnittstelle SS ausgeben, können die anderen, d.h. die den Cores C1 und C2 zugeordneten Debug-Ressourcen-Komponenten DR1 und DR2 erheblich einfacher aufgebaut sein als es bisher der Fall ist. Ihre Funktion kann sich darauf beschränken, die Befehle, die im jeweiligen Core ausgeführt werden, zu überwachen, zu beeinflussen und/oder mit den Befehlen oder dem Programmablauf in Zusammenhang stehende Daten an die Schnittstelle SS auszugeben; dabei kann es schon ausreichen, wenn der aktuelle Stand des Program Counter überwacht und bei Bedarf an die Schnittstelle SS ausgegeben wird.

Dadurch läßt sich der Aufbau der Debug-Ressourcen der programmgesteuerten Einheit erheblich vereinfachen. Zwar umfassen die Debug-Ressourcen eine größere Anzahl von Komponenten als es der Fall wäre, wenn wie bisher nur mit den Cores verbundene Debug-Ressourcen-Komponenten vorgesehen wären, doch sind diese mehreren Debug-Ressourcen-Komponenten erheblich einfacher aufgebaut.

Die mit den Bussen BUS1, BUS2, und BUS3 verbundenen Debug-Ressourcen-Komponenten DR3, DR4, und DR5 können im Vergleich zu Debug-Ressourcen-Komponenten, die die über die Busse übertragenen Adressen, Daten und/oder Steuersignale durch eine Beobachtung der innerhalb des Cores herrschenden Zustände und ablaufenden Vorgänge ermitteln, sehr viel einfacher aufgebaut sein, weil die Datenmenge, die pro Zeiteinheit über einen der Busse übertragen wird, erheblich geringer ist als die Datenmenge, die pro Zeiteinheit innerhalb der Cores übertragen wird und beobachtet werden muß, um die über die Busse übertragenen Daten zu ermitteln.

Die mit den Cores C1 und C2 verbundenen Debug-Ressourcen-Komponenten DR1 und DR2 können einfacher als bisher aufgebaut sein, weil aufgrund des Vorsehens der Debug-Ressourcen-Komponenten DR3, DR4 und DR5 keine Notwendigkeit mehr besteht, aus den in den Cores C1 und C2 ablaufenden Vorgängen die Datentransfers zwischen den Cores und/oder den restlichen Komponenten der programmgesteuerten Einheit zu ermitteln.

Unabhängig hiervon lassen sich durch die vorliegend beschriebenen Debug-Ressourcen in der programmgesteuerten Einheit auftretende Fehler sogar besser lokalisieren und beheben als es mit herkömmlichen Debug-Ressourcen möglich ist. Insbesondere können dadurch auch Datentransfers zwischen Peripherieeinheiten und/oder Speichereinrichtungen beobachtet werden, was bei einer alleinigen Beobachtung der in den Cores herrschenden Zustände und ablaufenden Vorgänge nicht möglich war.

Es dürfte einleuchten, daß die vorstehende Beschreibung der Funktion und der Kooperation der Debug-Ressourcen-Komponenten nur als beispielhaft anzusehen ist. Die Debug-Ressourcen-Komponenten können auch beliebige weitere oder andere Funktionen aufweisen und/oder anders kooperieren.

Unabhängig hiervon kann vorgesehen werden, daß die vorhandenen oder weitere Debug-Ressourcen-Komponenten mit den Peripherieeinheiten, den Speichereinrichtungen oder sonstigen Komponenten der programmgesteuerten Einheit (beispielsweise mit die Busvergabe steuernden Bus-Controllern) verbunden sind und die darin herrschenden Zustände oder ablaufenden Vorgänge beobachten, beeinflussen und/oder die Zustände oder Vorgänge repräsentierende Daten an die Schnittstelle SS ausgeben.

Es dürfte ferner einleuchten, daß sich der Einsatz der beschriebenen Debug-Ressourcen auch bei programmgesteuerten Einheiten mit mehr oder weniger als zwei Cores und/oder mit mehr oder weniger und/oder anderen Komponenten und Bussen als vorteilhaft erweist.

Unabhängig hiervon ist es auch möglich, die von den Debug-Ressourcen-Komponenten ausgegebenen Daten nicht sofort über die Schnittstelle SS aus der programmgesteuerten Einheit auszugeben, sondern innerhalb der programmgesteuerten Einheit zu speichern, bis sie von der externen Einrichtung, für welche diese Trace-Informationen bestimmt sind, abgeholt werden.

Durch den beschriebenen Core-spezifischen Program-Trace und Bus-spezifischen Daten-Trace können die Debug-Ressourcen der programmgesteuerten Einheit unabhängig von den Einzelheiten der praktischen Realisierung einfacher aufgebaut und bedient werden als es bei herkömmlichen Debug-Ressourcen der Fall ist, und sind die Debug-Ressourcen trotz des einfacheren Aufbaus und der einfacheren Bedienbarkeit sogar leistungsfähiger als herkömmliche Debug-Ressourcen.

### Bezugszeichenliste

- BUSx: Busse
- Cx: Cores
- DRx: Debug-Ressourcen
- Px: Peripherieeinheiten
- SS: Schnittstelle
- Sx: Speichereinrichtungen

## Patentansprüche

1. Programmgesteuerte Einheit mit einem oder mehreren Cores (C1, C2), und mit Debug-Ressourcen (DR1-DR5), durch welche ausgewählte Adressen, Daten, und/oder Steuersignale enthaltende Trace-Informationen aus der programmgesteuerten Einheit ausgegeben oder in dieser gespeichert werden,
**dadurch gekennzeichnet,**
**daß** die Debug-Ressourcen (DR1-DR5) eine oder mehrere Komponenten (DR3-DR5) enthalten, welche mit zwischen den Cores (C1, C2) und/oder einzelnen, mehreren oder allen sonstigen Komponenten (P1-P3, S1-S3) der programmgesteuerten Einheit verlaufenden Leitungen (BUS1-BUS3) verbunden sind, und welche von den über diese Leitungen transferierten Adressen, Daten, und/oder Steuersignale ausgewählte Adressen, Daten, und/oder Steuersignale aus der programmgesteuerten Einheit ausgeben oder in dieser speichern können.

2. Programmgesteuerte Einheit nach Anspruch 1,
**dadurch gekennzeichnet,**
**daß** die Komponenten (DR3-DR5) der Debug-Ressourcen (DR1-DR5), die mit den zwischen den Cores (C1, C2) und/oder einzelnen, mehreren oder allen sonstigen Komponenten (P1-P3, S1-S3) der programmgesteuerten Einheit verlaufenden Leitungen (BUS1-BUS3) verbunden sind, überprüfen können, ob die über die Leitungen transferierten Adressen, Daten, und/oder Steuersignale bestimmte Bedingungen erfüllen.

3. Programmgesteuerte Einheit nach Anspruch 1 oder 2,
**dadurch gekennzeichnet,**
**daß** die Komponenten(DR3-DR5) der Debug-Ressourcen (DR1-DR5), die mit den zwischen den Cores (C1, C2) und/oder einzelnen, mehreren oder allen sonstigen Komponenten (P1-P3, S1-S3) der programmgesteuerten Einheit verlaufenden Leitungen (BUS1-BUS3) verbunden sind, festlegen können, ob und gegebenenfalls welche der über die Leitungen transferierten Adressen, Daten, und/oder Steuersignale aus der programmgesteuerten Einheit auszugeben oder in dieser zu speichern sind.

4. Programmgesteuerte Einheit nach einem der vorhergehenden Ansprüche,
**dadurch gekennzeichnet,**
**daß** die Komponenten (DR3-DR5) der Debug-Ressourcen (DR1-DR5), die mit den zwischen den Cores (C1, C2) und/oder einzelnen, mehreren oder allen sonstigen Komponenten (P1-P3, S1-S3) der programmgesteuerten Einheit verlaufenden Leitungen (BUS1-BUS3) verbunden sind, veranlassen können, daß über die Leitungen transferierte Adressen, Daten, und/oder Steuersignale aus der programmgesteuerten Einheit ausgegeben oder in dieser gespeichert werden.

5. Programmgesteuerte Einheit nach einem der vorhergehenden Ansprüche,
**dadurch gekennzeichnet,**
**daß** die Debug-Ressourcen (DR1-DR5) weitere Komponenten (DR1, DR2) enthalten, wobei diese weiteren Komponenten (DR1, DR2) mit den Cores (C1, C2) verbunden sind, und wobei diese weiteren Komponenten ausgewählte Zustände oder Vorgänge in den Cores untersuchen, beeinflussen und/oder diese Zustände oder Vorgänge repräsentierende Daten aus der programmgesteuerten Einheit ausgeben oder in dieser speichern.

6. Programmgesteuerte Einheit nach Anspruch 5,
**dadurch gekennzeichnet,**
**daß** die ausgewählten Zustände und Vorgänge solche Zustände und Vorgänge sind, aus welchen sich ermitteln läßt, welche Befehle die Cores (C1, C2) gerade ausführen.

7. Programmgesteuerte Einheit nach Anspruch 5 oder 6,
**dadurch gekennzeichnet,**
**daß** die ausgewählten Zustände oder Vorgänge ausschließlich solche Zustände und Vorgänge sind, aus welchen sich ermitteln läßt, welche Befehle die Cores (C1, C2) gerade ausführen.

8. Programmgesteuerte Einheit nach einem der vorhergehenden Ansprüche,
**dadurch gekennzeichnet,**
**daß** die Debug-Ressourcen (DR1-DR5) Komponenten enthalten, wobei diese Komponenten mit den sonstigen Komponenten (P1-P3, S1-S3) der programmgesteuerten Einheit verbunden sind, und wobei diese Debug-Ressourcen-Komponenten ausgewählte Zustände und Vorgänge in den sonstigen Komponenten der programmgesteuerten Einheit untersuchen, beeinflussen und/oder diese Zustände oder Vorgänge repräsentierende Daten aus der programmgesteuerten Einheit ausgeben oder in dieser speichern.

## Revendications

1. Unité à commande programmée avec un ou plusieurs noyaux (C1, C2), et avec des ressources de débogage (DR1-DR5) grâce auxquelles des informations d'analyse contenant des adresses, des données et/ou des signaux de commande sélectionnés peuvent être sorties de l'unité à commande programmée ou mémorisées dans celle-ci, **caractérisée en ce que** les ressources de débogage (DR1-DR5) contiennent un ou plusieurs composants (DR3-DR5) qui sont reliés avec des lignes (BUS1-BUS3) courant entre les noyaux (C1, C2) et/ou certains, plusieurs ou la totalité des autres composants (P1-P3, S1-S3) de l'unité à commande programmée, et qui peuvent sortir de l'unité à commande programmée ou mémoriser dans celle-ci des adresses, des données et/ou des signaux de commande sélectionnés parmi les adresses, les données et/ou les signaux de commande transférés par ces lignes.

2. Unité à commande programmée selon la revendication 1, **caractérisée en ce que** les composants (DR3-DR5) des ressources de débogage (DR1-DR5) qui sont reliés avec les lignes (BUS1-BUS3) courant entre les noyaux (C1, C2) et/ou certains, plusieurs ou la totalité des autres composants (P1-P3, S1-S3) de l'unité à commande programmée peuvent vérifier si les adresses, données et/ou signaux de commande transférés par les lignes remplissent certaines conditions.

3. Unité à commande programmée selon la revendication 1 ou 2, **caractérisée en ce que** les composants (DR3-DR5) des ressources de débogage (DR1-DR5) qui sont reliés avec les lignes (BUS1-BUS3) courant entre les noyaux (C1, C2) et/ou certains, plusieurs ou la totalité des autres composants (P1-P3, S1-S3) de l'unité à commande programmée peuvent établir si des adresses, données et/ou signaux de commande transférés par les lignes doivent être sortis de l'unité à commande programmée ou mémorisés dans celle-ci, et le cas échéant lesquels.

4. Unité à commande programmée selon l'une quelconque des revendications précédentes, **caractérisée en ce que** les composants (DR3-DR5) des ressources de débogage (DR1-DR5) qui sont reliés avec les lignes (BUS1-BUS3) courant entre les noyaux (C1, C2) et/ou certains, plusieurs ou la totalité des autres composants (P1-P3, S1-S3) de l'unité à commande programmée peuvent faire en sorte que des adresses, données et/ou signaux de commande transférés par les lignes soient sortis de l'unité à commande programmée ou mémorisés dans celle-ci.

5. Unité à commande programmée selon l'une quelconque des revendications précédentes, **caractérisée en ce que** les ressources de débogage (DR1-DR5) contiennent d'autres composants (DR1-DR2), ces autres composants (DR1-DR2) étant reliés avec les noyaux (C1, C2), et ces autres composants examinant des états ou des processus sélectionnés dans les noyaux, les influençant et/ou sortant des données représentant ces états ou processus de l'unité à commande programmée ou les mémorisant dans celle-ci.

6. Unité à commande programmée selon la revendication 5, **caractérisée en ce que** les états et processus sélectionnés sont des états et processus qui permettent de déterminer quels ordres les noyaux (C1, C2) exécutent.

7. Unité à commande programmée selon la revendication 5 ou 6, **caractérisée en ce que** les états et processus sélectionnés sont exclusivement des états et processus qui permettent de déterminer quels ordres les noyaux (C1, C2) exécutent.

8. Unité à commande programmée selon l'une quelconque des revendications précédentes, **caractérisée en ce que** les ressources de débogage (DR1-DR5) contiennent des composants, ces composants étant reliés avec les autres composants (P1-P3, S1-S3) de l'unité à commande programmée, et ces composants de ressource de débogage examinant des états et des processus sélectionnés dans les autres composants de l'unité à commande programmée, les influençant et/ou sortant des données représentant ces états ou processus de l'unité à commande programmée ou les mémorisant dans celle-ci.

## Claims

1. Program-controlled unit having one or more cores (C1, C2), and having debug resources (DR1-DR5), by means of which trace information comprising selected addresses, data and/or control signals is output from the program-controlled unit or stored in it, **characterized in that** the debug resources (DR1-DR5) comprise one or more components (DR3-DR5) which are connected to lines (BUS1-BUS3) running between the cores (C1, C2) and/or individual components, a plurality of components or all the other components (P1-P3, S1-S3) of the program-controlled unit and which can output, from the program-controlled unit, addresses, data and/or control signals selected from the addresses, data and/or control signals transferred via these lines, or store them in it.

2. Program-controlled unit according to Claim 1, **characterized in that** the components (DR3-DR5) of the debug resources (DR1-DR5) which are connected to the lines (BUS1-BUS3) running between the cores (C1, C2) and/or individual components, a plurality of components or all the other components (P1-P3, S1-S3) of the program-controlled unit can be checked to determine whether the addresses, data and/or control signals transferred via the lines fulfill certain conditions.

3. Program-controlled unit according to Claim 1 or 2, **characterized in that** the components (DR3-DR5) of the debug resources (DR1-DR5) which are connected to the lines (BUS1-BUS3) running between the cores (C1, C2) and/or individual components, a plurality of components or all the other components (P1-P3, S1-S3) of the program-controlled unit can determine whether, and if so which, of the addresses, data and/or control signals which are transferred via the lines are to be output from the program-controlled unit or stored in it.

4. Program-controlled unit according to one of the preceding claims, **characterized in that** the components (DR3-DR5) of the debug resources (DR1-DR5) which are connected to the lines (BUS1-BUS3) running between the cores (C1, C2) and/or individual components, a plurality of components or all the other components (P1-P3, S1-S3) of the program-controlled unit can cause addresses, data and/or control signals transferred via the lines to be output from the program-controlled unit or stored in it.

5. Program-controlled unit according to one of the preceding claims, **characterized in that** the debug resources (DR1-DR5) comprise further components (DR1, DR2), these further components (DR1, DR2) being connected to the cores (C1, C2), and these further components examining and influencing selected states or processes in the cores and/or outputting data representing these states or processes from the program-controlled unit or storing it in it.

6. Program-controlled unit according to Claim 5, **characterized in that** the selected states and processes are states and processes from which it is possible to determine which instructions the cores (C1, C2) are carrying out at a particular time.

7. Program-controlled unit according to Claim 5 or 6, **characterized in that** the selected states or processes are exclusively states and processes from which it is possible to determine which instructions the cores (C1, C2) are carrying out at a particular time.

8. Program-controlled unit according to one of the preceding claims, **characterized in that** the debug resources (DR1-DR5) comprise components, these components being connected to the other components (P1-P3, S1-S3) of the program-controlled unit, and these debug resource components examining and influencing selected states and processes in the other components of the program-controlled unit and/or outputting data representing these states or processes from the program-controlled unit or storing it in it.
